# EUROPÄISCHE PATENTANMELDUNG

(11) **EP 1 336 339 A1**
(43) Veröffentlichungstag der Anmeldung: **20.08.2003**
(21) Anmeldenummer: 03003565.3
(22) Anmeldetag: 17.02.2003
(51) Int. Cl.: A21D 13/00, A21D 15/02, A23P 1/08

(54) **Halbfertiges Bäckereierzeugnis mit einer Füllung mit Speck und Zwiebeln als Hauptbestandteile und Verfahren zu seiner Herstellung als Imbissartikel**

(30) Priorität: 18.02.2002 DE 10206577
(71) Anmelder: Schieke Oliver, 06846 Dessau (DE); Schöneich Werner, 06847 Dessau (DE); Tetzel Réne, 06385 Aken (DE); Minkwitz Bodo, 06846 Dessau (DE)
(72) Erfinder: Schieke Oliver, 06846 Dessau (DE); Schöneich Werner, 06847 Dessau (DE); Tetzel Réne, 06385 Aken (DE); Minkwitz Bodo, 06846 Dessau (DE)
(74) Vertreter: Tragsdorf, Bodo, Dipl.-Ing.

(57) **Zusammenfassung**

Die Erfindung betrifft ein halbfertiges Bäckereierzeugnis mit einer Füllung mit Speck und Zwiebeln als Hauptbestandteile und ein Verfahren zu seiner Herstellung als Imbissartikel.

Ausgehend von den Nachteilen des bekannten Standes der Technik soll ein Bäckereierzeugnis geschaffen werden, das während des Backprozesses ein Entweichen der Backgase ohne Aufreißen der Teighülle ermöglicht und eine nahezu fettfreie Oberfläche besitzt. Ferner soll ein geeignetes Verfahren zur Herstellung des Bäckereierzeugnisses als Imbissartikel geschaffen werden.

Hierzu wird als Lösung ein halbfertiges gefülltes Bäckereierzeugnis vorgeschlagen, das nach dem Backen in einem herkömmlichen Backgerät die Form eines Brötchens aufweist und aus einer zweiteiligen Teighülle besteht, mit einer unteren flachen Teigschicht auf die eine gefrostete Füllung einer gedünsteten gewürzten Masse, bestehend aus zerkleinerten Zwiebelstücken, Speckwürfeln, Magerquark und Eiern, aufgelegt ist, und einer oberen mit mehreren kleinen, sich während des Backprozesses nicht schließenden Löchern versehenen Teigschicht, die um die gefrostete Füllung gelegt ist und mit der unteren Teigschicht fest verbunden ist.

Die Einsatzmenge an Magerquark beträgt mindestens die Hälfte der Einsatzmenge an Speck.

## Beschreibung

Die Erfindung betrifft ein halbfertiges Bäckereierzeugnis mit einer Füllung mit Speck und Zwiebeln als Hauptbestandteile und ein Verfahren zu seiner Herstellung als Imbissartikel.

Speckkuchen ist eine beliebte Backware, die aus einem Hefeteig und einem Belag mit den Hauptbestandteilen Zwiebeln und Speck besteht. Bekannt ist zum Beispiel die "Lothringer Specktorte" (Bocuse, Paul; Die neue Küche; Düsseldorf und Wien; Econ Verlag 1977, S. 41) deren Belag aus geräuchertem Brustspeck, Emmentaler Käse und gegarten Zwiebeln besteht, wobei die Zwiebeln in einer Mischung mit Eiern und Sahne oder Milch auf den bereits auf den Tortenboden aufgelegten Speck und Käse aufgetragen werden. Die halbfertige Torte wird anschließend im heißen Ofen bei starker Unterhitze gebacken.
Speckkuchen ist eine sehr fettige Backware und daher als Imbissartikel, die in der Regel mit den Händen eingenommen werden, ungeeignet. Außerdem besteht die Gefahr, dass beim Essen derart fettiger Backwaren ohne Besteck, die Kleidung beschmutzt werden kann.
Ein weiterer Nachteil des bekannten Speckkuchens besteht darin, dass aufgrund der Beschaffenheit des Belages, vor allem bedingt durch den relativ hohen Anteil an Speck, der Teig infolge der sich beim Backprozess bildenden Flüssigkeitsmenge stark durchfeuchtet wird. In der DE 39 03 673 A1 wird zur Lösung dieses Problems vorgeschlagen, den Teig mit einer essbaren Kollagenfolie zu belegen, auszukleiden oder zu umhüllen und den Belag auf die Kollegenfolie aufzubringen. Der Einsatz einer Kollagenfolie ist mit einem zusätzlichen Aufwand verbunden und erhöht die Kosten der Backware.

Der Erfindung liegt die Aufgabe zugrunde, ein halbfertiges Bäckereierzeugnis mit einer Füllung mit den Hauptbestandteilen Speck und Zwiebeln zu schaffen, das während des Backprozesses ein Entweichen der Backgase ohne Aufreißen der Teighülle ermöglicht und eine nahezu fettfreie Oberfläche besitzt. Ferner soll ein geeignetes Verfahren zur Herstellung des Bäckereierzeugnisses als Imbissartikel geschaffen werden.

Erfindungsgemäß wird die Aufgabe durch die im Anspruch 1 angegebenen Merkmale gelöst. Geeignete Ausgestaltungsvarianten sind Gegenstand der Ansprüche 2 bis 8. Die Verfahrensweise zur Herstellung des Bäckereierzeugnisses ist Gegenstand des Anspruches 9. Weiterbildungen der Verfahrensweise sind in den Ansprüchen 10 bis 16 angegeben.
Das halbfertige Bäckereierzeugnis besteht aus einer zweiteiligen Teighülle mit einer unteren flachen Teigschicht auf die die Füllmasse aufgelegt ist. Bei der Füllmasse handelt es sich um eine gewürzte Masse aus zerkleinerten Zwiebelstücken, Speckwürfeln, Magerquark und Eiern, die nach dem Dünsten schockgefroren wird und in diesem Zustand auf die untere, den späteren Boden bildende Teigschicht aufgelegt ist. Vorzugsweise weist die Füllmasse bzw. der Füllmasserohling nach dem Gefrierprozess die Form einer Halbkugel auf. Die Einsatzmenge an Magerquark beträgt mindestens die Hälfte der Einsatzmenge an Speck. Durch den relativ hohen Anteil an Magerquark wird das während des späteren Backprozesses gebildete Fett gebunden. Die obere Teigschicht, die auf den gefrosteten Füllmasserohling gelegt ist und diesen umhüllt, ist mit mehreren kleinen, sich während des Backprozesses nicht schließenden Löchern versehen. Die obere Teighülle ist mit der den Boden bildenden unteren Teighülle luftdicht verschlossen. Durch den Einsatz der gefrorenen Füllmasse wird erreicht, dass sich während des Backprozesses zuerst eine feste, bis auf die Löcher geschlossene Teighülle bildet und danach erst die Füllmasse erhitzt wird. Die sich während des Backprozesses bildenden Backgase können durch die in der oberen Teighülle befindlichen Löcher entweichen. Dadurch wird ein unerwünschtes Aufreißen oder Aufplatzen der oberen Teighülle vermieden. Ein Zusammenbacken der Löcher wird durch den Einsatz eines ölhaltigen Trennmittels verhindert. Durch den Einsatz einer Füllmasse im schockgefrorenen Zustand wird außerdem erreicht, dass der gewünschte speckkuchenähnliche Geschmack der Füllung während des Backprozesses nicht verloren geht. Von Vorteil ist weiterhin, dass die äußere Teighülle bzw. deren Oberfläche nach dem Backprozess nicht fettig ist. Dadurch kann es beim Verzehr der Backware zu keinen unerwünschten Verschmutzungen der Hände und der Kleidung kommen. Der Einsatz der Füllmasserohlinge in Form einer Halbkugel verleiht der äußeren Umhüllung eine optisch ansprechende äußere Form, da die Füllmasse erst am Ende des Backprozesses zerfällt. Nach Beendigung des Backprozesses weisen die einzelnen Backprodukte die Form eines Brötchens auf.
Die speckkuchenartige Füllmasse aus Speck, Zwiebeln, Magerquark und Eiern sowie Gewürzen weist vorzugsweise folgende Zusammensetzung auf:
1 kg bis 1,5 kg Speck, 3,5 kg bis 3,8 kg Zwiebeln, 0,8 kg bis 1,05 kg Magerquark und 0,45 kg bis 0,65 kg Flüssigei, jeweils bezogen auf eine Teigrohmasse von 10 kg.
Der Speck sollte aus fettem Schweinespeck und Rippenspeck zu jeweils gleichen Anteilen bestehen. An Gewürzen werden z. B. 20 g bis 30 g Salz, 8 g bis 14 g Pfeffer und 10 g bis 20 g Kümmel zugesetzt.
Die Herstellung der Teigschichten kann aus Hefekuchenteig, Mürbeteig, Blätterteig, Brotteig oder Brötchenteig entweder einzeln oder in Kombination erfolgen. Eine bevorzugte Kombination der Teigschichten bildet eine Zusammensetzung aus Brotteig und Brötchenteig, z.B. im Verhältnis von ca. 2:1.
Unmittelbar vor dem Backprozess kann auf die obere Teigschicht noch mindestens einer der Zusätze Kümmel, Salz, Paprika, geriebener Käse oder gemahlene Nüsse aufgetragen werden.

Zur Herstellung des gefüllten Bäckereierzeugnisses sind folgende Verfahrensschritte vorgesehen:
a) in kleine Teile geschnittener Speck und zerkleinerte Zwiebeln werden zu einer Masse verrührt und gedünstet, nach einer kurzen Abkühlzeit wird der abgekühlten Masse Magerquark in einer Menge von mindestens 50 % der eingesetzten Menge an Speck zugegeben und anschließend Eier eingerührt und die Masse gewürzt;
b) die nach Verfahrensschritt a) hergestellte Füllmasse wird portioniert, in Formen abgefüllt und schockgefroren;
c) auf eine erste vorbereitete dünne Teigschicht werden in definierten Abständen die einzelnen, gemäß Verfahrensschritt b) erhaltenen, gefrorenen Füllmasserohlinge gelegt;
d) in eine zweite vorbereitete Teigschicht werden mittels einer mit einem ölhaltigen Trennmittel benetzten Stippenwalze kleine Löcher eingebracht;
e) die zweite Teigschicht mit den Löchern wird über die auf der ersten Teigschicht befindlichen gefrorenen Füllmasserohlinge gelegt, die einzelnen Backrohlinge werden ausgestanzt und die Ränder der zweiten Teigschicht werden mit denen der ersten Teigschicht vollständig miteinander verbunden und
f) die einzelnen Backrohlinge in einem Backgerät bei einer Temperatur von ca. 240 °C bis 280 °C und während einer Zeitdauer von ca. 10 bis 25 min zu einem fertigen Imbissartikel mit einer rissfreien und trockenen, nicht fettenden Oberfläche gebacken werden.

Vorzugsweise wird die Füllmasse zu halbkugelförmigen Füllmasserohlingen geformt, die mit ihrer flachen Unterseite auf die untere, den Boden bildende Teigschicht aufgelegt werden.

Die hergestellten Backrohlinge können vorgebacken oder fertig gebacken und gegebenenfalls anschließend luftdicht verpackt tiefgefroren und in dieser Form in den Handel gebracht werden. Selbstverständlich können die Backrohlinge auch in einer gastronomischen Einrichtung unmittelbar vor dem Verkauf fertiggebacken werden.
Im Vergleich zu herkömmlichem Speckkuchen als Blechware handelt es sich bei den erfindungsgemäß hergestellten Produkte um Einzelstücke, die nicht gesondert geschnitten werden müssen und daher hervorragend für einen Verkauf als Imbissartikel geeignet sind. Die vollständige Umhüllung der speckkuchenartigen Füllung verleiht dem Produkt eine besonders individuelle Geschmacksnote. Die in relativ geschlossener Form vorliegenden Einzelstücke besitzen im Vergleich zu Speckkuchen nur einen geringen Eigengeruch nach Speck.

Die Erfindung soll nachstehend näher erläutert werden.

### A. Herstellung der Teighülle

Für die Herstellung der Teighülle können verschiedene Arten an Teig eingesetzt werden, wie z.B. Kuchenteig, Blätterteig, Mürbeteig, Brotteig oder Brötchenteig entweder einzeln oder in Kombination. Im folgenden sind einige geeignete Teigzusammensetzungen angegeben:

Zusammensetzung eines Kuchenteiges (für ca. 90 Stck. Backrohlinge):

| | |
|---|---|
| Weizenmehl | 2780 g |
| Zucker Grundsorte | 583 g |
| Margarine | 694 g |
| Hefe | 556 g |
| Hefekuchenmehl | 278 g |
| Wasser | 1110 g |

Zusammensetzung eines Blätterteiges (für ca. 50 Stck. Backrohlinge):

| | |
|---|---|
| Weizenmehl 405 | 1290 g |
| Margarine | 1010 g |
| Jodsalz | 13 g |
| Wasser | 269 g |

Zusammensetzung eines Brotteiges:

| | |
|---|---|
| Roggenmehl 997 | 3880 g |
| Wasser | 3880 g |
| Brotbackmittel | 194 g |
| Jodsalz | 129 g |
| Weizenmehl | 2590 g |
| Hefe | 324 g |

Zusammensetzung eines Brötchenteiges:

| | |
|---|---|
| Weizenmehl Typ 550 | 3410 g |
| Hefe | 427 g |
| Wasser | 1710 g |
| Jodsalz | 68 g |
| Brötchenbackmittel | 85 g |

Brot- und Brötchenteig vorgenannter Zusammensetzungen werden im Verhältnis von ca. 2:1 unter Zugabe von 750 g Fett verknetet. Aus der Teigrohmasse lassen sich ca. 190 Backrohlinge herstellen.

### B. Zusammensetzung und Zubereitung der Füllmasse

Zusammensetzung der Füllmasse (für ca. 190 Stck. Backrohlinge)

| | |
|---|---|
| Fetter Schweinespeck | 1110 g |
| Rippenspeck | 1110 g |
| Zwiebeln | 6330 g |
| Magerquark | 1580 g |
| Eier A2 | 19 Stck. |
| Jodsalz | 42 g |
| Pfeffer (grob gemahlen) | 19 g |
| Kümmel | 25 g |

Die Zubereitung der Füllmasse geschieht folgendermaßen:
Schweinespeck und Rippenspeck werden in kleine Würfel (ca. 5 bis 10 mm groß) geschnitten. Anschließend werden die Zwiebeln in kleine Stücke (ca. 1 bis 2 cm) zerkleinert. Der Speck und die Zwiebeln werden in ein teflonbeschichtetes Behältnis gegeben und unter ständigem leichten Rühren gedünstet, während einer Zeitdauer von ca. 45 min. Die Zwiebeln sollten nach dem Dünsten möglichst eine bräunliche Farbe aufweisen. Die Zwiebeln dürfen dabei nicht zu Mus verrührt werden. Anschließend, nach einer kurzen Abkühlzeit, wird zuerst der Magerquark untergehoben und danach werden die Eier und die Gewürze zugegeben. Die so erhaltene breiige Füllmasse wird in halbkugelförmige Formen gefüllt und schockgefroren. Nach dem Einfrierprozess können dann die halbkugelförmigen Füllmasserohlinge aus der Form gestürzt werden, um entweder direkt weiterverarbeitet oder luftdicht verpackt als Tiefkühlware zwischengelagert zu werden.

### C. Herstellung der Backrohlinge

Die jeweils hergestellten Teige gemäß A. werden auf einer flachen Unterlage ausgerollt und in zwei annähernd gleichgroße Teigstücke geteilt, eine erste bzw. untere flache Teigschicht, die den späteren Teigboden bildet, und eine zweite bzw. obere flache Teigschicht, die obere Hülle bzw. Abdeckung bildet.
Die zweite Teigschicht wird mittels einer Stippenwalze behandelt um in diese Teigschicht kleine Löcher einzubringen. Damit sich die Löcher während des späteren Backprozesses nicht wieder verschließen können, wird die Stippenwalze in kurzen Zeitabständen immer wieder in ein ölhaltiges Trennmittel getaucht. Die in die obere Teighülle gleichmäßig eingebrachten Löcher ermöglichen während des Backvorganges ein nahezu vollständiges Entweichen der gebildeten Backgase. Dadurch wird ein Aufplatzen der Teighülle während des Backprozesses vermieden. Auf die untere, den Teigboden bildende Teigschicht werden die gefrosteten halbkugelförmigen Füllmasserohlinge mit ihrer flachen Unterseite in definierten Abständen positioniert bzw. abgelegt und anschließend wird über diese bzw. auf diese die obere, mit Löchern versehene Teigschicht gelegt. Durch leichtes Andrücken der oberen Teigschicht werden die halbkugelförmigen Füllmasserohlinge fixiert.
Danach erfolgt das Ausstechen der einzelnen Backrohlinge. Dabei ist darauf zu achten, dass während des Ausstechvorganges die obere und untere Teigschicht fest und luftdicht miteinander verbunden werden. Bei einer manuellen Arbeitsweise werden hierfür zwei spezielle Ausstecher benutzt. Der erste Ausstecher eine treppenförmige Stechkante auf und der nachfolgend eingesetzte zweite Ausstecher besitzt an der Stechkante eine Verzahnung. Nach dem Aufsetzen und Andrücken wird dieser leicht nach rechts bzw. nach links gedreht und dadurch die Ränder der beiden Teigschichten dicht miteinander verschlossen.
Die beschriebene Herstellung der Backrohlinge kann auch maschinell innerhalb einer industriellen Backlinie erfolgen.
Die Backrohlinge weisen eine Form und Größe wie Backrohlinge zur Herstellung handelsüblicher Brötchen auf.
Die hergestellten Backrohlinge können entweder fertig gebacken oder vorgebacken werden. Es besteht auch die Möglichkeit, die fertig gebackenen oder vorgebackenen Produkte luftdicht zu verpacken und einzufrieren. Diese können dann zu einem späteren Zeitpunkt unmittelbar vor dem Verzehr aufgebacken werden
Die an sich vollkommen ungewöhnliche Zusammensetzung der Backrohlinge aus einer Teighülle und einer darin befindlichen, schockgefrorenen halbkugelförmigen Füllmasse erfordert ganz spezielle Backbedingungen, um ein in der Qualität einwandfreies Endprodukt zu erhalten.
Die direkte Weiterverarbeitung der Backrohlinge erfolgt durch Backen nach dem Schwaden-Dampf-Backverfahren mit geschlossenem Zug bei Backtemperaturen von vorzugsweise ca. 250 °C bis 260 °C und einer Backzeit von ca. 15 bis 18 min. Die Backbedingungen gewährleisten, dass erst die Backhülle eine feste und nahezu geschlossene Form annimmt und dann erst die gefrostete Füllmasse erwärmt wird. Nach dem Herausnehmen der Backstücke aus dem Backraum wird die in den Backstücken gespeicherte Wärme zumindest teilweise noch an die Füllmasse abgegeben.
Die fertig gebackenen Produkte weisen eine äußerliche Form wie ein rundes Brötchen auf, das an seiner Unterseite einen flachen Boden und oberhalb des Bodens gewölbt ist. Unmittelbar vor dem Backprozess kann die Oberseite der Produkte noch mit verschiedenen Zusätzen unterschiedlicher Geschmacksrichtung, wie z.B. Kümmel, Salz, gemahlenen Nüssen, geriebenem Käse oder dgl. versehen werden.
Die Füllmasse verleiht dem Produkt einen speckkuchenähnlichen Geschmack.
Von besonderem Vorteil ist, dass das fertige Produkt zumindest rein äußerlich relativ trocken und nicht fettig ist und sich auch beim Verzehr keine Fetttropfen bilden, die möglicherweise für den Verbraucher unangenehm sein könnten. Das neue Produkt ist daher hervorragend als Imbissartikel geeignet bzw. für einen Verkauf als sogenannter "Fast food-Artikel". Ausgehend von den eingesetzten Zutaten stellt es ein vollwertiges Nahrungsmittel mit einem relativ geringen Kaloriengehalt dar.
Das fertig gebackene Produkt kann auch tiefgefroren und zu einem späteren Zeitpunkt wieder aufgebacken werden.

## Patentansprüche

1. Halbfertiges gefülltes Bäckereierzeugnis, das nach dem Backen in einem herkömmlichen Backgerät die Form eines Brötchens aufweist, bestehend aus einer zweiteiligen Teighülle mit einer unteren flachen Teigschicht auf die eine gefrostete Füllung einer gedünsteten gewürzten Masse, bestehend aus zerkleinerten Zwiebelstücken, Speckwürfeln, Magerquark und Eiern, aufgelegt ist, wobei die Einsatzmenge an Magerquark mindestens die Hälfte der Einsatzmenge an Speck beträgt, und einer oberen mit mehreren kleinen, sich während des Backprozesses nicht schließenden Löchern versehenen Teigschicht, die um die gefrostete Füllung gelegt ist und mit der unteren Teigschicht fest verbunden ist.

2. Bäckereierzeugnis nach Anspruch 1, **dadurch gekennzeichnet, dass** die Einsatzmengen an Speck ca. 1 kg bis 1,5 kg, an Zwiebeln ca. 3,5 kg bis 3,8 kg, an Magerquark ca. 0,8 kg bis 1,05 kg und an Flüssigei ca. 0,45 kg bis 0,65 kg, jeweils auf eine Teigrohmasse von 10 kg bezogen, betragen.

3. Bäckereierzeugnis nach einem der Ansprüche 1 oder 2, **dadurch gekennzeichnet, dass** die Füllung in Form einer Halbkugel schockgefroren ist.

4. Bäckereierzeugnis nach einem der Ansprüche 1 bis 3, **dadurch gekennzeichnet, dass** der Speck aus fettem Schweinespeck und Rippenspeck zu jeweils gleichen Anteilen besteht.

5. Bäckereierzeugnis nach einem der Ansprüche 1 bis 4, **dadurch gekennzeichnet, dass** die Teigschichten aus Hefekuchenteig, Blätterteig, Mürbeteig, Brotteig oder Brötchenteig, entweder einzeln oder in Kombination, bestehen.

6. Bäckereierzeugnis nach einem der Ansprüche 1 bis 5, **dadurch gekennzeichnet, dass** die Teigschichten aus einer Kombination von Brotteig und Brötchenteig bestehen.

7. Bäckereierzeugnis nach Anspruch 6, **dadurch gekennzeichnet dass** Verhältnis der Einsatzmengen an Brotteig zu Brötchenteig ca. 2:1 beträgt.

8. Bäckereierzeugnis nach einem der Ansprüche 1 bis 7, **dadurch gekennzeichnet, dass** auf die obere Teigschicht mindestens einer der Zusätze Kümmel, Salz, Paprika, geriebener Käse oder gemahlene Nüsse aufgetragen ist.

9. Verfahren zur Herstellung eines gefüllten Bäckereierzeugnisses als Imbissartikel durch folgende Verfahrensschritte:
a) in kleine Teile geschnittener Speck und zerkleinerte Zwiebeln werden zu einer Masse verrührt und gedünstet, nach einer kurzen Abkühlzeit wird der abgekühlten Masse Magerquark in einer Menge von mindestens 50 % der eingesetzten Menge an Speck zugegeben und anschließend Eier eingerührt und die Masse zumindest mit Salz und Pfeffer gewürzt;
b) die nach Verfahrensschritt a) hergestellte Füllmasse wird portioniert, in Formen abgefüllt und schockgefroren;
c) auf eine erste vorbereitete dünne Teigschicht werden in definierten Abständen die einzelnen, gemäß Verfahrensschritt b) erhaltenen, gefrorenen Füllmasserohlinge gelegt;
d) in eine zweite vorbereitete Teigschicht werden mittels einer mit einem ölhaltigen Trennmittel benetzten Stippenwalze kleine Löcher eingebracht;
e) die zweite Teigschicht mit den Löchern wird über die auf der ersten Teigschicht befindlichen gefrorenen Füllmasserohlinge gelegt, die einzelnen Backrohlinge werden ausgestanzt und die Ränder der zweiten Teigschicht werden mit denen der ersten Teigschicht vollständig miteinander verbunden und
f) die einzelnen Backrohlinge in einem Backgerät bei einer Temperatur von ca. 240 °C bis 280 °C und während einer Zeitdauer von ca. 10 bis 25 min zu einem fertigen Imbissartikel mit einer rissfreien und trockenen, nicht fettenden Oberfläche gebacken werden.

10. Verfahren nach Anspruch 9, **dadurch gekennzeichnet, dass** bei der Herstellung der Füllmasse Magerquark in einer Menge zugegeben wird, die mindestens die Hälfte der Einsatzmenge an Speck beträgt.

11. Verfahren nach einem der Ansprüche 9 oder 10, **dadurch gekennzeichnet, dass** die Füllmasse zu halbkugelförmigen Füllmasserohlingen geformt wird, die mit ihrer flachen Unterseite auf die untere, den Boden bildende Teigschicht aufgelegt werden.

12. Verfahren nach einem der Ansprüche 9 bis 11, **dadurch gekennzeichnet, dass** zur Bildung der Füllmasse Speck in einer Menge von ca.1 kg bis 1,5 kg, Zwiebeln in einer Menge von ca. 3,5 kg bis 3,8 kg, Magerquark in einer Menge von ca. 0,8 kg bis 1,05 kg und Flüssigei in einer Menge von ca. 0,45 kg bis 0,65 kg, jeweils auf 10 kg Teigrohmasse bezogen, eingesetzt werden.

13. Verfahren nach einem der Ansprüche 9 bis 12, **dadurch gekennzeichnet, dass** als Teig Hefekuchenteig, Blätterteig, Mürbeteig, Brotteig oder Brötchenteig, entweder einzeln oder in Kombination, eingesetzt werden.

14. Verfahren nach einem der Ansprüche 9 bis 13, **dadurch gekennzeichnet, dass** als Teig Brotteig und Brötchenteig im Verhältnis von ca. 2:1 eingesetzt werden, wobei die beiden Teige unter Zugabe von Fett verknetet werden.

15. Verfahren nach einem der Ansprüche 9 bis 14, **dadurch gekennzeichnet, dass** die fertig gebackenen Backstücke luftdicht verpackt und tiefgefroren und zu einem späteren Zeitpunkt aufgebacken werden.

16. Verfahren nach einem der Ansprüche 9 bis 15, **dadurch gekennzeichnet, dass** vor dem Backprozess auf die Oberseite Backrohlinge mindestens einer der Zusätze Kümmel, Salz, Paprika, geriebener Käse oder gemahlene Nüsse aufgetragen wird.
